# EUROPÄISCHE PATENTSCHRIFT

(11) **EP 4 314 411 B1**
(45) Veröffentlichungstag und Bekanntmachung des Hinweises auf die Patenterteilung: **01.01.2025**
(21) Anmeldenummer: 22731123.0
(22) Anmeldetag: 24.05.2022
(51) Int. Cl.: E01C 13/08

(54) **STREUGRANULAT, DESSEN VERWENDUNG SOWIE RASEN- ODER KUNSTRASENPLATZ MIT EINEM SOLCHEN STREUGRANULAT ALS EINSTREUGRANULAT**
SPREADABLE GRANULES, USE OF SAME AND GRASS LAWN OR ARTIFICIAL GRASS LAWN WITH SUCH SPREADABLE GRANULES AS INFILL GRANULES
GRANULÉS D'ÉPANDAGE, LEUR UTILISATION ET TERRAIN EN GAZON OU EN GAZON SYNTHÉTIQUE COMPRENANT CES GRANULÉS D'ÉPANDAGE COMME GRANULÉS DE REMPLISSAGE

(30) Priorität: 26.05.2021 DE 102021113612
(43) Veröffentlichungstag der Anmeldung: 07.02.2024
(73) Patentinhaber: Tecnaro Gesellschaft zur industriellen Anwendung nachwachsender Rohstoffe mbH, 74360 Ilsfeld (DE); Morton Extrusionstechnik GmbH, 69518 Abtsteinach (DE)
(72) Erfinder: PFITZER, Jürgen, 71717 Beilstein (DE); NÄGELE, Helmut, 74336 Brackenheim (DE); SCHWEIZER, Michael, 71691 Freiberg (DE); SCHAWALLER, Dirk, 74360 Ilsfeld (DE); SCHOLZ, Lena, 71729 Erdmannhausen (DE); HÄBERLE, Michael, 74354 Besigheim (DE); MOURGAS, Georgios, 74223 Flein (DE); HABIB, Eric, Montreal, Québec H8Z 3B9 (CA); BERGHAUS, Ulrich, 53844 Troisdorf (DE)
(74) Vertreter: Lichti - Patentanwälte Partnerschaft mbB
(86) Internationale Anmeldenummer: PCT/EP2022/063982
(87) Internationale Veröffentlichungsnummer: WO 2022/248440

(56) Entgegenhaltungen:
- WO-A2-2018/016956
- US-A1- 2018 179 711
- US-A1- 2020 165 784

## Beschreibung

Die Erfindung betrifft ein Streugranulat, welches zur Verwendung als Einstreugranulat für Rasen- und Kunstrasenplätze geeignet ist, wobei das Streugranulat eine Polymermatrix mit einem Anteil zwischen 10 Mass.-% und 100 Mass.-% wenigstens eines biologisch abbaubaren Polymers und wenigstens einen in die Polymermatrix mit dem wenigstens einen biologisch abbaubaren Polymer eingebetteten Füllstoff aus der Gruppe der natürlichen Füllstoffe aufweist. Die Erfindung bezieht sich ferner auf die Verwendung eines solchen Streugranulates sowie auf einen Rasen- oder Kunstrasenplatz, auf welchen ein solches Streugranulat als Einstreugranulat aufgebracht ist.

Rasen- und Kunstrasenplätze finden insbesondere in Form von Sportplätzen, wie beispielsweise als Fußball-, Hockey-, Tennis-, Rugbyplatz und dergleichen, verbreitet Verwendung. Darüber hinaus sind gattungsgemäße Rasen- und Kunstrasenplätze z.B. in Form von Reit- und Pferdesportplätzen, Hundeplätzen oder allgemein der Tierhaltung dienenden Plätzen bekannt.

Die Rasen- und Kunstrasenplätze müssen hierbei einer Vielzahl an Anforderungen genügen, wobei insbesondere eine hohe Umweltfreundlichkeit im Vordergrund steht. Darüber hinaus müssen im Falle einer Verwendung der Rasen- oder Kunstrasenplätze als Sportplatz deren sporttechnischen Eigenschaften ein auf die jeweilige Sportart abgestimmte Profil aufweisen und entsprechenden Normen und Regelwerken genügen. So muss beispielsweise der Kraftabbau für den Fußballbetrieb zwischen 55% und 65% betragen, wobei gleichzeitig die Energierückgabe in einem Bereich von 38% bis 43 % liegen muss, um für eine spätere Zertifizierung in Betracht zu kommen. Darüber hinaus darf die vertikale Deformation 9 mm nicht überschreiten. Um die Verletzungsgefahr für den Nutzer zu minimieren, darf ferner der Drehwiderstand nicht geringer als 25 Nm und nicht höher als 50 Nm ausfallen. Die vorgenannten Werte können entsprechenden Normen bzw. Prüfvorschriften entnommen werden, wie z.B. der DIN 18035-7 "Sportplätze - Teil 7: Kunststoffrasensysteme" oder der DIN EN 14808 "Sportböden - Bestimmung des Kraftabbaus". Ebenfalls von Bedeutung ist die maximale Wasserinfiltrationsrate von größer 500 mm/h, welche nach der DIN EN 12616 "Sportböden - Bestimmung der Wasserinfiltrationsrate" zu bestimmen ist.

Neben Naturrasenplätzen nimmt in jüngerer Zeit zunehmend die Bedeutung von Kunstrasenplätzen zu, um insbesondere die mit der Pflege von Naturrasen und dem hiermit einhergehenden Ressourcenverbrauch (wie Wasser, Dünger etc.) verbundenen Unterhaltskosten einzusparen. Hierbei wird beim Neubau von Sportplätzen auf verschiedene Kunststoffrasensysteme zurückgegriffen, welche im Vergleich zu Naturrasen eine pflegeleichte und unkrautfreie Oberfläche bieten, welche weder bewässert noch gedüngt werden muss und weitestgehend unabhängig vom Wetter einsatzbereit ist. Kunstrasenplätze weisen üblicherweise einen mehrschichtigen Aufbau aus verschiedenen Komponenten auf, wobei sich häufig an einen Untergrund (z.B. aus einem Baugrund, einer Tragschicht und gegebenenfalls einer Asphaltschicht) eine Elastikschicht oder eine gebundene elastische Tragschicht anschließt. An die elastische Schicht schließt sich wiederum eine stabilisierende Rückenschicht an, auf welcher sich der eigentliche Kunststoffrasen befindet. Letzterer besteht vornehmlich aus Fasern, welche in einen Teppich eingewebt sind. Die in Deutschland verwendeten Kunstrasenplätze basieren dabei auf den Normen DIN 18035-7 sowie DIN EN 15330-1. Die Faserschicht wird in aller Regel zusätzlich mit einem Einstreugranulat, wie z.B. Sand und/oder Gummigranulat, verfüllt, wie dies auch bei natürlichen Rasenplätzen der Fall ist.

Die Elastikschicht von Kunstrasenplätzen dient einerseits dem Ausgleich von Unebenheiten des darunterliegenden Untergrundes, so dass eine vollständig plane, wasserdurchlässige Fläche gegeben ist. Zugleich sorgt die Elastikschicht für den Kraftabbau durch Dämpfung während der Nutzung. In Deutschland ist eine solche elastische Schicht gemäß der vorgenannten Norm DIN 18035-7 für Kunststoffrasenplätze grundsätzlich vorgesehen, wobei deren Schichtdicke in der Regel zwischen etwa 30 mm und etwa 35 mm variieren kann. Außerhalb Deutschlands ist die Schichtdicke der elastischen Schicht üblicherweise geringer und beträgt in der Regel kleiner etwa 25 mm, wobei teilweise gar gänzlich auf die elastische Schicht verzichtet wird. Die fehlende Elastizität wird in diesem Fall durch eine größere Menge an Einstreugranulat kompensiert. Für die Faserkomponente des Kunststoffrasens werden gegenwärtig vorrangig Kunststofffasern, z.B. aus Polyethylen (PE), verwendet, wobei zusätzlich eine zweite - kürzere - Faserkomponente als Stützstruktur eingesetzt werden kann, welche ein Aufrichten der eigentlichen Fasern gewährleistet. Aufgrund der höheren Festigkeit wird als Stützfaser gegenwärtig teilweise Polypropylen (PP) oder gleichfalls PE eingesetzt. Zur Herstellung der Faserkomponente werden Faserfilamente auf ein Trägergewebe getuftet, welches anschließend auf der Elastikschicht verlegt wird.

Um den eingangs genannten Normen DIN 18035-7 bzw. DIN EN 14808 zu genügen, stellen Einstreugranulate für Kunstrasenplätze, aber auch für natürliche Rasenplätze, eine wichtige Komponente dar, wobei sie insbesondere zum Erreichen des erforderlichen Kraftabbaus, der vertikalen Deformation und des Drehwiderstand (siehe oben) dienen können. Darüber hinaus trägt das Einstreugranulat maßgeblich zum Ballsprung- und Ballrollverhalten bei, wie es im Falle einer Verwendung des (Kunst)rasenplatzes für Ballsportarten notwendig ist. Ferner vermag das Einstreugranulat die Lebensdauer von Kunstrasenplätzen zu verlängern, indem dessen Verschleiß während der Benutzung verringert wird. Das Einstreugranulat sollte ferner hinreichend witterungs- und UV-beständig sein, um über längere Zeiträume seine Funktionen erfüllen zu können.

In Bezug auf die Art von gegenwärtig verwendeten Einstreugranulaten für Rasen- und Kunstrasenplätze, welche auch als "Infill" bezeichnet werden, kommen vornehmlich einerseits mineralische Einstreugranulate, andererseits Kombinationen aus mineralischen und synthetisch hergestellten Einstreugranulaten zum Einsatz, wobei letztere aus nachgiebigen, in der Regel organischen Füllstoffen gebildet sind. Als mineralisches Einstreugranulat wird oftmals Quarzsand verwendet, welcher den Drehwiderstand und die Rutschfestigkeit des Rasens erhöht und im Falle von Kunstrasen diesen beschwert sowie eine Stabilisierung der Fasern gewährleistet. Allerdings stellen die üblicherweise scharfkantigen Sandpartikel eine Verletzungsgefahr hinsichtlich Hautaufschürfungen dar und besitzen derartige Sande ein sehr hohes Gewicht, was sowohl ihren Transport als auch das Ausbringen auf dem (Kunst)rasenplatz aufwändig gestaltet. Synthetische Einstreugranulate sorgen hingegen für die notwendige Dämpfung und im Falle von Sportplätzen für die weiteren Eigenschaften zur Erzielung einer entsprechenden Sportfunktionalität. So sollen Verletzungen vorgebeugt und ein angenehmes "Spielgefühl" vermittelt werden.

Die gegenwärtig bekannten synthetischen Einstreugranulate für Rasen- und Kunstrasenplätze sind aus Kostengründen vornehmlich aus recyceltem Styrol-Butadien-Kautschuk (SBR) gefertigt, welcher aus Altreifen gewonnen worden ist. Aufgrund der dunklen Einfärbung solcher SBR-Granulate werden die Oberflächentemperaturen der hiermit bestreuten Rasenplätze erhöht, was insbesondere im Falle von Kunststoffrasenplätzen, welche oftmals eine ohnehin höhere Oberflächentemperatur als natürliche Rasenplätze besitzen, ein Problem darstellt. So konnten an heißen Sommertagen bei Temperaturen von bis zu etwa 40°C an der Oberfläche von mit SBR-Granulaten bestreuten Kunstrasenplätzen Temperaturen von bis zu 75°C an der Kunststoffrasenoberfläche gemessen werden, was eine Benutzung des Kunstrasenplatzes praktisch unmöglich macht. Darüber hinaus ist bei relativ hohen Temperaturen, wie sie während des Sommers vorherrschen, der für SBR typische Geruch dominant, weshalb eine Kühlung des Kunststoffrasenplatzes im Sommer unerlässlich ist. Um dem zu begegnen, wurden als Einstreugranulate vorgesehene SBR-Granulate bereits mit Beschichtungen auf der Basis von Polyurethanen (PUR) aus einer helleren Farbe versehen, welche sich aufgrund der mechanischen Belastung bei intensiver Beanspruchung jedoch relativ schnell abnutzt. Neben SBR als Hauptkomponente derartiger Einstreugranulate enthalten bekannte Einstreugranulate als Zusatzstoffe ferner unter anderem verschiedene Weichmacheröle, Ruß, Antioxidantien sowie metallische Bestandteile, wie beispielsweise Zink, Kupfer oder Chrom, aufgrund deren gesundheitlichen und umweltrelevanten Auswirkungen die Verwendung von recyceltem SBR als Einstreugranulat für (Kunst)rasenplätze in jüngerer Zeit kontrovers diskutiert wird, wobei insbesondere die in den Weichmacherölen enthaltenen polyzyklischen aromatischen Kohlenwasserstoffe (PAK) eine bedeutende Rolle spielen.

Als Alternative zu SBR sind weiterhin Einstreugranulate für (Kunst)rasenplätze auf der Basis von Ethylen-Propylen-Dien-Kautschuk (EPDM) bekannt, wobei EPDM unter Verwendung bestimmter Stabilisatoren gleichfalls eine gute Wetterresistenz bei weitestgehend gleichbleibender Elastizität aufweisen kann. Ein weiterer Vorteil von EPDM gegenüber SBR-Rezyklaten besteht darin, dass die Farbe des Granulates bei der Herstellung frei gewählt werden kann. Neben einem deutlich höheren Preis erweist es sich jedoch als nachteilig, dass es sich bei EPDM - wie auch bei SBR-Granulaten - um ein vernetztes Elastomer handelt, wodurch es nicht wiederaufschmelzbar ist. Dies schränkt die Auswahl an anwendbaren Recyclingtechnologien und somit die Umweltfreundlichkeit insgesamt ein.

Als weitere Möglichkeit können für vornehmlich elastische Einstreugranulate thermoplastische Elastomere (TPE) eingesetzt werden, deren elastischer Anteil für die entsprechenden mechanischen Eigenschaften zu sorgen vermag, während der thermoplastische Anteil gewährleistet, dass das Polymer aufgeschmolzen werden kann. Auf diese Weise ist eine Verarbeitung von TPE analog zu reinen Thermoplasten und im Vergleich zu SBR und EPDM eine bessere Rezyklierbarkeit möglich. Indes stellen TPE nicht nur die weitaus teuersten Materialien für Einstreugranulate dar, sondern hat sich bei den gegenwärtig bereits für Einstreugranulate verwendeten Styrol-basierten TPE gezeigt, dass das Einstreugranulat bei hohen Umgebungstemperaturen bereits beginnt zu erweichen. Dies führt zu einer klebrigen Konsistenz des TPE, welche bei Nutzung des (Kunst)rasenplatzes an Kleidung und Schuhen haftet und im Falle von Kunstrasen zudem die einzelnen Fasern miteinander verklebt, so dass der Kunstrasenplatz beschädigt wird.

Ein grundsätzliches Problem in Verbindung mit synthetischen Einstreugranulaten für (Kunst)rasenplätze der vorgenannten Arten sowie allgemein in Verbindung mit Streugranulaten, welche der Umgebung exponiert sind, besteht des Weiteren insbesondere in deren nicht zu vermeidendem Eintrag in die Umwelt, was nicht nur während der Benutzung des (Kunst)rasenplatzes, sondern auch rein durch Umgebungseinflüsse, wie Wind, Regen, künstliche Bewässerung und dergleichen, geschieht. Laut Definition des deutschen Umweltbundesamtes fallen derartige Streugranulate unter die Kategorie "Mikroplastik", mit welcher Kunststoffpartikel mit einer Größe von bis zu 5 mm bezeichnet werden. Dabei ist zwischen sogenannten primären und sekundären Mikropartikeln zu unterscheiden. Während primäre Mikropartikel gezielt für unterschiedliche Anwendungen hergestellt werden, entstehen sekundäre Mikropartikel unbeabsichtigt durch physikalische, chemische oder biologische Zersetzung sowie durch Fragmentierung von Kunststoffteilen. Folglich ergibt sich bei mit derartigen Einstreugranulaten versehenen (Kunst)stoffrasen-plätzen zwangsläufig ein Austrag sowohl von primärem Mikroplastik in Form des "Infills" selbst als auch von sekundärem Mikroplastik über Faserabrieb und/oder Zerkleinerung des "Infills". Wie hoch der Austrag im Einzelfall ist, hängt von verschiedenen Faktoren ab, wie unter anderem von der Art und Menge sowie gegebenenfalls des Alters des Einstreugranulates, der Faserstruktur und -geometrie sowie der Länge des (Kunst)rasens, der Art und Intensität der Benutzung, Pflege und Wartung des (Kunst)rasenplatzes, den naturräumlichen Gegebenheiten (z.B. in Überschwemmungsgebieten, in Windschneisen etc.) sowie lokalen Wetterereignissen. Als hauptsächliche Austragspfade für Streugranulate wurden hierbei vor allem Regen und Wind einschließlich künstlicher Bewässerung (zu etwa 70%), Entwässerung (zu etwa 15%), Schneeräumen (zu etwa 10%) sowie ein nicht unerheblicher Austrag über Kleider und Schuhe identifiziert. Im Territorium der Europäischen Union wird den gegenwärtig verwendeten synthetischen Einstreugranulaten für Kunststoffrasensysteme gar der größte Anteil in Bezug auf bewusst eingesetztes Mikroplastik zugeschrieben, wobei nach Schätzungen der European Chemicals Agency (ECHA) jährlich insgesamt rund 100.000 t Streugranulat verbraucht wird. Zugleich stellen diese Streugranulate die größte Quelle für Mikroplastikaustrag in die Umwelt dar, wobei von einem Austrag von rund 16.000 t pro Jahr ausgegangen, sodass sich rechnerisch eine Freisetzungsrate von etwa 16% ergibt.

Indes sollte ein Austrag von Mikroplastik in die Umwelt - sei es in aquatische Systeme oder sei es in Böden - aufgrund der sowohl umwelt- als auch gesundheitsrelevante Folgen für Flora und Fauna so weit wie möglich verhindert werden. So können derartige Partikel beispielsweise von Tieren mit Nahrung verwechselt und aufgenommen werden, was zu einer Schädigung und Irritation des Darmtraktes führen. Werden die Partikel nicht ausgeschieden, so bleibt beim Tier ein Sättigungsgefühl bestehen und es kommt zu Mangelerscheinungen oder gar zu einem Verhungern. Eine weitere Problematik stellt die Migration schädlicher Bestandteile aus dem Kunststoff dar, welche über den Austrag in die Nahrungskette gelangen können, wie beispielsweise die weiter oben erwähnten, vornehmlich in SBR-Rezyklaten enthaltenen Weichmacheröle. Letztere können wiederum polyzyklische aromatische Kohlenwasserstoffe (PAK) enthalten, welche teilweise als krebserregend, erbgutverändernd und/oder fortpflanzungsgefährdend eingestuft werden. Darüber hinaus können PAK persistent sein, d.h. sie verbleiben lange in der Umwelt bzw. werden schlecht abgebaut. Zusätzlich sind sie in der Lage zu bioakkumulieren, sich also im Fettgewebe von Mensch und Tier anzureichern, wodurch sich ihre gesundheitsgefährdende Wirkung besonders massiv auswirkt. In Bezug auf Streugranulate aus EPDM konnten ferner bei Pflanzen ein reduziertes Wachstum sowie negative Auswirkungen auf das Wurzelsystem beobachtet werden. Überdies können sich Mikropartikel auch direkt auf Bodenorganismen und daraus folgend auf die Bodenfunktionalität auswirken, wobei unter anderem eine verringerte Reproduktion und geringere Körperlänge von Faserwürmern, sogenannten Nematoden, infolge des Einflusses von Mikroplastik beobachtet wurde. Speziell in Bezug auf SBR-Rezyklate aus Altreifen kommt hinzu, dass zusätzlich Schwermetalle, wie z.B. Zink, Kupfer und Chrom, in die Umwelt gelangen können, wodurch entsprechende Grenzwerte in Böden oder Wasser überschritten werden können.

In jüngerer Zeit wurde zunehmend an Alternativen für sogenannte "Infill"-Werkstoffe, welche vornehmlich als Einstreugranulate für (Kunst)rasenplätze, aber auch für andere Anwendungsgebiete Verwendung finden können, geforscht, welche nicht synthetischen Ursprungs sind, sondern auf natürlichen Ressourcen beruhen. Am weitesten verbreitet unter den natürlichen nachgiebigen Einstreugranulaten ist hierbei aus Korkeiche gewonnener Kork, welcher mit Kokosnussfasern verstärkt sein kann. Für die Anwendung speziell für Kunstrasenplätze erweist sich unter anderem die geringe Dichte, die hohe Festigkeit, der geringe Verschleiß sowie die geringe Wärmeabsorption bei Sonneneinstrahlung des Korks von Vorteil. Nachteilig sind jedoch die stark variierenden Eigenschaften von Kork bei unterschiedlichen Wetterbedingungen. So kann das Korkgranulat bei tiefen Temperaturen im Frostbereich z.B. mehr oder minder aushärten. Bei Starkregen kann der Kork aufgrund seiner geringen Dichte leicht in großen Mengen ausgetragen werden. Im Sommer neigt das Korkgranulat hingegen zur Austrocknung, so dass es unter Staubbildung an Kleidung und Schuhen kleben bleibt und an Elastizität verliert. Daher ist im Falle einer Verwendung von Korkgranulaten eine künstliche Bewässerung des (Kunst)rasenplatzes bei höheren Temperaturen unerlässlich. Im Vergleich zu den weiter oben beschriebenen synthetischen Einstreugranulaten ist die Haltbarkeit von Kork zudem weitaus geringer, so dass das Korkgranulat häufig ausgetauscht werden muss.

Aus der Literatur sind schließlich auch Streugranulate mit einer zumindest teilweise aus biologisch abbaubaren Polymeren gebildeten Polymermatrix bekannt, welche den entscheidenden Vorteil besitzen, dass sie bei einer hinreichenden Lebensdauer gleichwohl weitgehend rückstandsfrei in sowohl gesundheitlich als auch ökotoxikologisch unbedenkliche Abbau- und/oder Stoffwechselprodukte zersetzt werden können, um für eine hohe Umweltfreundlichkeit zu sorgen, ohne dass es zu einem Eintrag von langzeitstabilen oder gar ökotoxischen Mikroplastikpartikeln kommt. Sofern solche Streugranulate insbesondere als Einstreugranulat für (Kunst)rasenplätze Verwendung finden, enthalten sie zudem in der Regel einen nicht unerheblichen Anteil eines oder mehrerer Füllstoffe, um den demgegenüber zumeist deutlich teureren Polymeranteil in Grenzen zu halten. So beschreibt beispielsweise die US 2020/0165784 A1 einen Kunstrasenplatz für Sportzwecke, welcher einerseits ein Kunstrasenfasern umfassendes Substrat, andererseits ein Einstreugranulat aufweist, welches aus biobasiertem und/oder biologisch abbaubarem Kunststoff gebildet ist. Beispiele solcher Kunststoffe umfassen Polylactid (PLA), Polybutylensuccinat (PBS), Polycaprolacton (PCL), Poly(3-hydroxybutyrat-co-3-hydroxyvalerat) (PHBV), Polyhydroxyalkanoat (PHA), Polyhydroxybutyrat (PHB), Polyethylen (PE), Polypropylene (PP) oder deren Derivate. Die Polymermatrix des Einstreugranulates kann mit verschiedenen Füllstoffen versetzt sein, wobei sowohl natürliche Füllstoffe in Form von Fasern oder Feinpartikeln, wie Stärke, Kork, Kokosnuss, Hanf, Gras, Cellulose, Schilf, Heu, Stroh oder auch Karton, als auch mineralische Füllstoffe, wie Zeolithe, CaCO₃, SiO₂, Al₂O₃, MgO, Kalk, Kaolin oder Talk, vorgesehen sein können.

In der US 2018/0179711 A1 geht es ebenfalls um einen Kunstrasenplatz, welcher einerseits ein Kunstrasenfasern auf Polymerbasis umfassendes Substrat, andererseits ein Einstreugranulat aufweist. Das Einstreugranulat besteht aus Komposit-Partikeln, welche einerseits zwischen 10 und 90 Mass.-% eines thermoplastischen Polymers, andererseits zwischen 10 und 80 Mass.-% Cellulosefasern enthalten. Für die Polymermatrix des Einstreugranulates kommen sowohl herkömmliche synthetische als auch biobasierte und biologisch abbaubare Polymere in Betracht, wie beispielsweise Stärkebasierte Polymere, Polylactid (PLA), Poly-3-hydroxybutyrat oder biobasiertes Polyethylen. Neben den vorgenannten Cellulosefasern können weitere Füllstofffasern zugesetzt sein, wie solche aus der Gruppe verschiedener Weich- und Harthölzer, Bambus, Rattan, Reis- und Weizenstroh, Reishülsen, Bagasse, Baumwollstroh, Jute, Hanf, Flax, Kenaf, Seidenpflanzen, Gras, Bananenstauden, Kokos-, Wal-, Pekan- oder andere Nussschalen sowie Erdnusshülsen. Darüber hinaus können mineralische Füllstoffe, wie Muschelschalen oder aus anderen Quellen stammendes CaCO₃, Mica, Talk, Barit oder Keramik, vorgesehen sein (Ansprüche 10 und 11).

Der WO 2018/016956 A1 ist ein weiterer Kunstrasenplatz für Sportzwecke zu entnehmen, welcher einerseits ein Substrat mit künstlichen Grasfasern, andererseits ein Einstreugranulat umfasst. Auch in diesem Fall ist die Polymermatrix der Granulatpartikel aus biobasierten und biologisch abbaubaren Polymeren gefertigt, wie insbesondere Polylactid und dessen Derivaten, Polybutylensuccinat (PBS), Polycaprolacton (PCL), Poly(3-hydroxybutyrat-co-3-hydroxyvalerat) (PHBV), Polyhydroxyalkanoat (PHA) oder Polyhydroxybutyrat (PHB). Darüber hinaus sind auch hier verschiedene Füllstoffe vorgesehen), welche weitestgehend jenen der oben zitierten US 2020/0165784 A1 entsprechen.

Die US 2019/0316303 A1 beschreibt schließlich einen weiteren Kunstrasenplatz mit einem Einstreugranulat, welches zwischen 10 und 40 Mass.-% in Kautschuk eingemischte Naturfasern enthält, welche aus der Gruppe Hanf-, Baumwoll-, Leinen-, Sisal-, Elefantengras- und/oder Cellulosefasern gewählt sind, sowie ein Verfahren zu dessen Herstellung.

Was die dem Stand der Technik vorgeschlagenen Füllstoffe bzw. -fasern des Streugranulates betrifft, so umfassen diese einerseits gegenüber der Polymermatrix der Granulatpartikel sehr weiche Pflanzenfasern, wie Holz-, Nussschalen- oder Blattfasern, mit welchen zwar die Materialkosten verringert werden können, ohne dass das Gewicht des Einstreugranulates in nennenswerter Weise erhöht wird, welche den Granulatpartikeln aber zumeist nicht eine hinreichende Härte zu verleihen vermögen, um sie an die jeweilige Sportfunktionalität anpassen zu können, wie es weiter oben erläutert ist. In Bezug auf Füllstoffe mit einer gegenüber der Polymermatrix der Granulatpartikel sehr großen Härte werden ausschließlich mineralische Füllstoffe, wie Zeolithe, CaCO₃, SiO₂, Al₂O₃, MgO, Kalk, Kaolin oder Talk bzw. Muschelschalen oder aus anderen Quellen stammendes CaCO₃, Mica, Talk, Barit oder Keramik vorgeschlagen. Mit derartigen Füllstoffen lässt sich die Härte des Einstreugranulates zwar an unterschiedliche Sportfunktionalitäten anpassen, doch sind solche Füllstoffe mit einer Reihe von Nachteilen behaftet. So ist einerseits ihr Gewicht deutlich höher als jenes der Polymermatrix, was sowohl ihren Transport als auch das Ausbringen, z.B. als Einstreugranulat auf dem (Kunst)rasenplatz, aufwändig gestaltet. Andererseits sind sie nicht biologisch abbaubar und reichern sich daher mit zunehmender Standzeit an, was es insbesondere bei Kunstrasenplätzen zu vermeiden gilt. Darüber hinaus weisen mineralische Füllstoffe in aller Regel sehr scharfkantige Formen auf und stellen somit insbesondere im Falle einer Verwendung als Einstreugranulate für (Kunst)rasenplätze zum Einen eine erhöhte Verletzungsgefahr, z.B. hinsichtlich Hautabschürfungen, dar. Zum Anderen wirken sie in höchsten Maße abrasiv und führen so zu Beschädigungen von Kunstrasenplätzen, welche in kürzeren Standzeiten derselben resultieren.

Der Erfindung liegt die Aufgabe zugrunde, unter zumindest weitestgehender Vermeidung der vorgenannten Nachteile ein einfaches und kostengünstiges, für die Verwendung als Einstreugranulat für Rasen- und Kunstrasenplätze geeignetes Streugranulat vorzuschlagen, welches eine größtmögliche Umweltverträglichkeit besitzt und sich insbesondere auch für Sportplätze anbietet, indem es den eingangs beschriebenen sporttechnischen Eigenschaften genügt. Sie ist ferner auf die Verwendung eines solchen Streugranulates sowie auf einen Rasen- oder Kunstrasenplatz gerichtet, auf welchen ein solches Streugranulat als Einstreugranulat aufgebracht ist.

Der erste Teil dieser Aufgabe wird erfindungsgemäß bei einem Streugranulat der eingangs genannten Art dadurch gelöst, dass das Streugranulat wenigstens einen Füllstoff aus der Gruppe der zerkleinerten Fruchtkerne aufweist.

Zur Lösung dieser Aufgabe sieht die Erfindung bei einem Rasen- oder Kunstrasenplatz, auf welchen ein Einstreugranulat aufgebracht ist, des Weiteren vor, dass es sich bei dem Einstreugranulat um ein Streugranulat der vorgenannten Art handelt.

Schließlich sieht die Erfindung zur Lösung dieser Aufgabe die Verwendung eines solchen Streugranulates insbesondere als Einstreugranulat für Rasen- und Kunstrasenplätze, aber auch als Distanzmaterial für die Lagerung von Baumaterialien, insbesondere in Form von Bodenbelagsmaterialien, und/oder als Winterdienst-Streumittel vor.

Das erfindungsgemäße Streugranulat, welches beispielsweise als Einstreugranulat in als solcher bekannter Weise auf Rasen- oder Kunstrasenplätze eingestreut werden kann, ist einerseits hinreichend stabil und weitestgehend wasserunlöslich, um auch nach längerer Exposition gegenüber Sonneneinstrahlung, Niederschlag, Frost und anderer äußerer Einflüsse seine Funktion zu erfüllen. Dabei wurde insbesondere gefunden, dass das erfindungsgemäße Streugranulat die sporttechnischen Anforderungen nicht nur an natürliche Rasenplätze, sondern insbesondere auch an Kunstrasenplätze gänzlich zu erfüllen vermag, wobei es speziell im Falle von Kunstrasenplätzen ferner die erforderliche stabilisierende Wirkung der Faserschicht übernimmt. Es kann somit in hervorragender Weise in gleichem Maße wie die bereits bekannten, synthetischen Einstreugranulate die Funktionen
- der Lagestabilität von Kunstrasen,
- des Schutzes der Trägerschicht von Kunstrasen,
- der Stabilisierung der Fasern von Kunstrasen,
- der Optimierung des Kraftabbaus, der Energierückgewinnung und des Drehwiderstandes bei der Ausübung von beliebigen Sportarten, sowie
- der Optimierung der Ballreflexion bei der Ausübung von Ballsportarten
   übernehmen.

Andererseits macht es die Erfindung möglich, dass sich das Streugranulat im Hinblick darauf, dass es - wie oben erwähnt - stets zu einem nicht unerheblichen Anteil aus dem (Kunst)rasenplatz ausgetragen wird oder im Falle weiterer vorteilhafter Verwendungen anderweitig in die Umwelt gelangt, weitestgehend rückstandsfrei in sowohl gesundheitlich als auch ökotoxikologisch unbedenkliche Abbau- und/oder Stoffwechselprodukte zersetzt, um für eine einwandfreie Umweltfreundlichkeit zu sorgen, ohne dass es zu einem Eintrag von langzeitstabilen oder gar ökotoxischen Mikroplastikpartikeln kommt. Unter "biologisch abbaubar" im Sinne der Erfindung ist gemeint, dass das wenigstens eine Polymer des Streugranulates durch Mikroorganismen, wie Bakterien und Pilze, bzw. durch Enzyme vollständig abgebaut werden kann. Die Mikroorganismen nutzen dabei das Polymer als Nahrung bzw. als Energiequelle. Bei dieser Verstoffwechselung müssen die Polymere unter aeroben Bedingungen vollständig zu Kohlendioxid (CO₂), Wasser (H₂O), mineralischen Salzen und neuer Biomasse abgebaut werden. Ohne Sauerstoffzufuhr, also unter anaerobe Bedingungen, muss eine vollständige Umwandlung in Kohlendioxid, mineralische Salze, Biomasse und Methan (CH₄) stattfinden. Das wenigstens eine biologisch abbaubare Polymer des Streugranulates kann dabei vorzugsweise kompostierbar gemäß der Norm DIN EN 13432 bzw. der US-amerikanischen Norm ASTM D6400 sein, wobei die Kompostierung einen Sonderfall der biologischen Abbaubarkeit darstellt. Bei der industriellen Kompostierung muss das kompostierbare Polymer innerhalb einer vergleichsweise kurzen Zeitdauer von maximal zwei Jahren unter kontrollierten Bedingungen (d.h. einer Temperatur von etwa 60°C und einer definierten Feuchtigkeit) vollständig abgebaut werden.

Die erfindungsgemäß als Füllstoff des Streugranulates eingesetzten zerkleinerten Fruchtkerne bieten dabei speziell für die Verwendung des Streugranulates als Einstreugranulat sowohl für Rasen- als auch insbesondere für Kunstrasenplätze, aber auch für andere Anwendungszwecke (siehe hierzu weiter unten) eine Reihe von Vorteilen, wobei beispielhaft die folgenden Aspekte genannt seien: So sind die erfindungsgemäßen Füllstoffe auf der Basis von zerkleinerten Fruchtkernen - wie auch das Matrixpolymer des Streugranulates - vollständig biologisch abbaubar und reichern sich somit mit zunehmender Standzeit weder an, noch verschleißen sie ihrerseits zu umweltschädlichen Mikro- oder Nanopartikeln. Sie stehen zudem in großer Menge zur freien Verfügung, da sie mangels technischer Verwendung bislang fast ausschließlich kompostiert oder anderweitig entsorgt werden, so dass es keiner zusätzlicher landwirtschaftlicher Nutzflächen zu ihrer Gewinnung bedarf, wie es bei verbreitet eingesetzten Pflanzenfasern üblicherweise der Fall ist. Die erfindungsgemäßen Füllstoffe auf der Basis von zerkleinerte Fruchtkernen vermögen dem Streugranulat darüber hinaus eine gegenüber Pflanzenfasern größere Härte zu verleihen, um es im Falle einer Verwendung als Einstreugranulat für (Kunst)rasenplätze an die jeweilige Sportfunktionalität anpassen zu können, ohne insbesondere dessen Gewicht in nennenswerter Weise zu erhöhen, wie es bei den bekannten mineralischen Füllstoffen der Fall ist. Zudem sind die erfindungsgemäßen Füllstoffe auf der Basis von zerkleinerte Fruchtkernen weniger scharfkantig als derartige mineralische Partikel und vermindern somit im Falle einer Verwendung des Streugranulates als Einstreugranulat für (Kunst)rasenplätze einerseits die Verletzungsgefahr des Sportlers, andererseits werden insbesondere Kunstrasenplätze aufgrund der geringeren Abrasivität der erfindungsgemä-ßen Füllstoffe nicht übermäßig beansprucht und erhalten somit eine längere Lebensdauer.

Aus den vorgenannten Gründen kann der wenigstens eine Füllstoff aus der Gruppe der zerkleinerten Fruchtkerne eine gegenüber der Härte der Polymermatrix höhere Härte aufweisen, wobei es je nach verwendetem Matrixpolymer des Streugranulates und je nach dessen Verwendungszweck selbstverständlich grundsätzlich auch möglich ist, demgegenüber weitere Fruchtkerne einzusetzen.

Beispiele geeigneter Fruchtkerne, wie sie in zerkleinerter Form als Füllstoff des erfindungsgemäßen Streugranulates zum Einsatz gelangen können, umfassen vorzugsweise - wenngleich nicht ausschließlich - Kerne von Olive, Kirsche, Aprikose, Mirabelle, Pflaume, Zwetschge, Pfirsich, Nektarine, Dattel, Mandel, Kaffeebeere, Mango, Apfel, Birne, Orange, Traube, Melone, Zitrone, Avocado, Papaya und dergleichen. Darüber hinaus können z.B. zur Einstellung der gewünschten Härte des Streugranulates auch Füllstoffe mit Mischungen verschiedener zerkleinerter Fruchtkerne Verwendung finden, wie z.B. mit Olivenkern-, Kirschkern-, Aprikosenkernmehl und dergleichen.

Die Polymermatrix des Streugranulates kann in vorteilhafter Ausgestaltung einen Anteil des wenigstens einen biologisch abbaubaren Polymers von wenigstens etwa 20 Mass.-%, insbesondere von wenigstens etwa 30 Mass.-%, vorzugsweise von wenigstens etwa 40 Mass.-%, höchst vorzugsweise von wenigstens etwa 50 Mass.-%, aufweisen. Besonders bevorzugt sind Anteile des wenigstens einen biologisch abbaubaren Polymers von wenigstens etwa 60 Mass.-%, insbesondere von wenigstens etwa 70 Mass.-%, vorzugsweise von wenigstens etwa 80 Mass.-%, höchst vorzugsweise von wenigstens 90 Mass.-%, wobei der Anteil des wenigstens einen biologisch abbaubaren Polymers auch zumindest nahezu 100 Mass.-% betragen kann.

In weiterhin vorteilhafter Ausgestaltung kann vorgesehen sein, dass wenigstens ein biologisch abbaubares Polymer der Polymermatrix des Streugranulates aus der Gruppe der biobasierten Polymere gewählt ist, bei welchen es sich um Polymere handelt, welche vollständig oder teilweise aus nachwachsenden Rohstoffen hergestellt werden können, wie sie weiter unten noch näher erläutert sind.

Die Polymermatrix des Streugranulates sollte zweckmäßigerweise ferner eine Wasserlöslichkeit von höchstens etwa 0,5 g/l, z.B. von höchstens etwa 0,3 g/l, insbesondere von höchstens etwa 0,1 g/l, aufweisen, so dass das Streugranulat weitestgehend unlöslich in Wasser und unter der Einwirkung von Niederschlägen, wie Regen oder Schnee, über einen längeren Zeitraum formstabil ist und sich nicht auflöst.

Um insbesondere für einwandfreie sporttechnische Eigenschaften zu sorgen, erweist es sich ferner als vorteilhaft, wenn die Polymermatrix des Streugranulates einen Elastizitätsmodul von etwa 0,1 GPa bis etwa 8 GPa, insbesondere von etwa 0,2 GPa bis etwa 5 GPa, aufweist.

Die Polymermatrix des Streugranulates sollte darüber hinaus einen Schmelzpunkt von wenigstens etwa 70°C, insbesondere von wenigstens etwa 80°C, vorzugsweise von wenigstens etwa 90°C, z.B. von wenigstens etwa 100°C, aufweisen, um auch bei sehr hohen Umgebungstemperaturen und/oder direkter Sonneneinstrahlung zu verhindern, dass das Streugranulat teilweise oder gänzlich aufschmilzt.

In Bezug auf die für die Polymermatrix des erfindungsgemäßen Streugranulates eingesetzten biologisch abbaubaren Polymer kann in vorteilhafter Ausgestaltung vorgesehen sein, dass wenigstens ein biologisch abbaubares Polymer der Polymermatrix des Streugranulates aus der Gruppe der thermoplastischen Polymere gewählt ist, so dass einerseits eine einfache Herstellung mittels bekannter thermoplastischer Verarbeitungsverfahren (z.B. mittels Extrudieren und Zerkleinern des Extrudates zu dem Streugranulat mittels eines Schneidwerkzeugs, was zwecks der Erzeugung von weitestgehend sphärischen Granulatpartikeln vorzugsweise unter Wasser geschehen kann), möglich ist, andererseits eine einfache Rezyklierbarkeit des Streugranulates gegeben ist. Vorteilhafte biologisch abbaubare Polymere umfassen insbesondere solche gemäß der weiter oben zitierten Norm DIN EN 13432, insbesondere aus der Gruppe
- der Polyhydroxyalkanoate, insbesondere Polyhydroxybutyrat (PHB), Poly-4-hydroxybutyrat (P4HB), Polyhydroxyvalerat (PHV), Polyhydroxyessigsäure, Poly(3-hydroxybutyrat-co-4-hydroxybutyrat), Poly(3-hydroxybutyrat-co-4-hydroxy-butyrat), Poly(3-hydroxybutyrat-co-4-hydroxybutyrat), Polyhydroxyhexanoat (PHH) und/oder Polyhydroxyoctanoat (PHO) ;
- Polylactid (PLA);
- Stärke und/oder deren Derivate;
- Polybutylenadipat-terephthalat (PBAT), Polybutylensuccinat (PBS) und/oder Polybutylensuccinat-adipat (PBSA) ;
- Polysaccharide und/oder deren Derivate;
- Lignin und/oder dessen Derivate;
- Polycaprolactone (PCL);
- Proteine und/oder deren Derivate einschließlich deren Blends.
Bei den biologisch abbaubaren Polymeren kann es sich folglich um solche handeln, welche aus Monomeren synthetisiert sind. Bei den biologisch abbaubaren Polymeren kann es sich, wie oben erwähnt, vorteilhafterweise um biobasierte Polymere handeln, wie vorzugsweise Polymilchsäure (PLA), Polyhydroxyalkanoate (PHA), z.B. Polyhydroxybutyrat (PHB), Stärke und/oder Lignin einschließlich deren Derivaten etc., sowie auch um nicht biobasierte Polymere, wie beispielsweise Polybutylen-adipat-terephthalat (PBAT), Polycaprolactone (PCL) etc. Darüber hinaus können die biologisch abbaubaren Polymer z.B. auch teilweise biobasiert sein, wie z.B. im Falle von Polybutylensuccinat (PBS) oder Polybutylensuccinat-adipat (PBSA). Beispiele für Polysaccharid-Derivate umfassen beispielsweise solche, bei welchen funktionelle Gruppen des natürlichen Polymers, z.B. die OH- und/oder die NH₂-Gruppen, teilweise oder vollständig substituiert sind, wie beispielsweise im Falle von Celluloseestern (wie z.B. Celluloseacetat, Celluloseacetatbutyrat, Celluloseacetatpropionat etc.), Stärkeestern (wie z.B. Stärkeacetat, acetyliertes Distärkeadipat etc.) oder teilweise deacetyliertem Chitin und dessen Derivaten.

Dabei können insbesondere auch mehrere biologisch abbaubare Polymere in Form eines Blends bzw. einer Polymermischung zum Einsatz gelangen, welche jeweils biobasiert, nicht biobasiert und/oder teilweise biobasiert sein können. Dies kann sich auch im Hinblick darauf als vorteilhaft erweisen, dass einige biologisch abbaubare Polymere auf konventionellen thermoplastischen Verarbeitungsmaschinen, wie insbesondere Einfach- oder Doppelschneckenextrudern, nur schwer verarbeitet werden können und/oder die Eigenschaften der reinen Polymere allein nicht zufriedenstellend sind. Werden hingegen mehrere Polymere in der Schmelze physikalisch zu einem Blend vermischt, so lassen sich beispielsweise Stärke-PBAT-Blends oder PLA-PBAT-Blends generieren, welche gut verarbeitungsfähig sind. Neben einer möglichen Beimischung von Zusatzstoffen, wie Additive, weiteren Füllstoffen und dergleichen (siehe hierzu weiter unten), können auf diese Weise die Vorteile verschiedener biologisch abbaubarer Polymere kombiniert und etwaige Nachteile, wie z.B. eine dominierende Sprödigkeit eines Blendpartners, ausgeglichen werden.

Darüber hinaus kann insbesondere - wenngleich nicht ausschließlich - im Falle der Verwendung des Streugranulates als Einstreugranulates für Sportplätze vorzugsweise vorgesehen sein, dass wenigstens ein biologisch abbaubares Polymer der Polymermatrix des Streugranulates aus der Gruppe der elastomeren Polymere gewählt ist, insbesondere aus der Gruppe Naturkautschuk (z.B. aus Kautschukpflanzen und/oder Löwenzahnmilch), um dem Streugranulat die jeweils gewünschte Elastizität zu verleihen, wobei die elastomeren Polymere insbesondere mit einem oder mehreren der oben genannten thermoplastischen Polymere gemischt werden kann, um die gewünschte Elastizität einzustellen. Auf diese Weise lässt sich insbesondere einem zu Sportzwecken dienenden Rasen- oder Kunstrasenplatz ein angenehmes und sicheres Spielgefühl verleihen, indem die mechanischen Kennwerte des Streugranulates durch die Wahl des Anteils eines jeweiligen Blendpartners seiner Polymermatrix modifiziert werden können. Darüber hinaus ist beispielsweise auch eine kovalente Integration einer Weichphase in das wenigstens eine biologisch abbaubare Polymer des Streugranulates denkbar, um die dämpfenden oder nachgiebig elastischen Eigenschaften einzustellen. Beispiele für eine solche Weichphase umfassen die Integration von niedermolekularen Polyethylenglycolen (PEG), welche bis zu einer mittleren Molmasse von etwa 1500 g/mol biologisch abbaubar sind.

Der wenigstens eine Füllstoff aus der Gruppe der zerkleinerten Fruchtkerne des erfindungsgemäßen Streugranulates kann vorteilhafterweise in einem Anteil von wenigstens etwa 10 Mass.-%, insbesondere von wenigstens etwa 20 Mass.-%, vorzugsweise von wenigstens etwa 30 Mass.-%, jeweils bezogen auf die Gesamtmasse des Streugranulates, vorliegen, wobei es die Erfindung möglich macht, auch demgegenüber deutlich höhere Anteile an zerkleinerten Fruchtkernen zur Verfügung zu stellen, wie z.B. wenigstens etwa 40 Mass.-%, wenigstens etwa 50 Mass.-%, wenigstens etwa 60 Mass.-% oder wenigstens etwa 70 Mass.-%, z.B. bis hin zu etwa 80 Mass.-%, wiederum jeweils bezogen auf die Gesamtmasse des Streugranulates.

Der wenigstens eine Füllstoff aus der Gruppe der zerkleinerten Fruchtkerne des erfindungsgemäßen Streugranulates kann vorteilhafterweise ferner
- eine Partikelgröße von wenigstens etwa 0,01 mm, insbesondere von wenigstens etwa 0,1 mm, vorzugsweise von wenigstens etwa 0,3 mm, z.B. von wenigstens etwa 0,5 mm;
   und/oder
- eine Partikelgröße von höchstens etwa 1,5 mm, insbesondere von höchstens etwa 1 mm, vorzugsweise von höchstens etwa 0,8 mm,
   aufweisen.

Gemäß einer Weiterbildung kann vorgesehen sein, dass das Streugranulat wenigstens einen weiteren in die Polymermatrix mit dem wenigstens einen biologisch abbaubaren Polymer eingebetteten Füllstoff aufweist. Bei dem Füllstoff kann es sich um im Wesentlichen pulver-, partikel- oder faserförmige Füllstoffe handeln, welche aus den oben genannten Gründen vorzugsweise ihrerseits natürlichen Ursprungs und biologisch abbaubar sein sollten. Beispiele möglicher zusätzlicher Füllstoffe umfassen insbesondere faser- oder partikelförmige bzw. mehlartige Naturstoffe, wie Cellulose, Lignin, Holz, Schilf, Miscanthus, Hanf, Seegras, Nussschalen und dergleichen, wobei je nach Anwendungsgebiet des Streugranulates beispielsweise auch mineralische Stoffe, wie z.B. Asche, Verwendung finden können. Besonders bevorzugte Beispiele weiterer Füllstoffe umfassen gemahlene Nussschalen, z.B. von Walnuss, Haselnuss, Pistazien, Datteln, Mandeln, Paranuss, Pekannuss, Macadamianuss, Cashewnuss, Kastanie, Esskastanie (Marone), Eichel und dergleichen, sowie gemahlene Schalen von Blumenkernen, wie z.B. von Sonnenblumenkernen und dergleichen. Ferner ist es beispielsweise denkbar, weitere Füllstoffe aus pflanzenbasierten Vulkanisaten, z.B. auf der Basis von Löwenzahnmilch, Furfurylalkohol etc., oder aus höherschmelzenden Biokunststoffen oder deren Recyclaten einzusetzen.

Darüber hinaus können der Polymermatrix des Streugranulates selbstverständlich als solche bekannte Additive zugesetzt sein, wie beispielsweise Verarbeitungshilfsmittel, UV-Stabilisatoren, Flammschutzmittel, Farbstoffe und Pigmente, ökologisch unbedenkliche Weichmacher, wie z.B. in Form von natürlichen Ölen oder Wachsen, und dergleichen.

Wie bereits angedeutet, kann es sich bei vielen Verwendungen des Streugranulates als vorteilhaft erweisen, wenn dieses abgerundete, insbesondere im Wesentlichen sphärische, Granulatpartikel aufweist, was insbesondere für eine Verwendung für Rasen- und Kunstrasenplätze in Form von Sportplätzen gilt, um den sporttechnischen Anforderungen in idealer Weise zu genügen und durch scharfkantige Granulatpartikel bedingten Verletzungsgefahren, wie Hautabschürfungen oder dergleichen, vorzugbeugen. Wie ebenfalls bereits angedeutet, lassen sich solche, im Wesentlichen runde Granulatpartikel beispielsweise dadurch erzeugen, indem die z.B. mittels eines Düsenaggregates eines Ein- oder Mehrschneckenextruders extrudierten Extrudate durch Unterwassergranulierung zu den Granulatpartikeln abgelängt werden, wobei sie z.B. unter Wasser mittels eines rotierenden Schneidwerkzeugs geschnitten werden.

Je nach Verwendungszweck kann das Streugranulat ferner vorzugsweise eine Granulatpartikelgröße von
- wenigstens etwa 1,0 mm, insbesondere von wenigstens etwa 1,5 mm, vorzugsweise von wenigstens etwa 2,0 mm, und/oder
- höchstens etwa 5,0 mm, insbesondere von höchstens etwa 4,5 mm, vorzugsweise von höchstens etwa 4,0 mm,
aufweisen, wobei die Partikelgröße z.B. einerseits durch den gewählten Düsenquerschnitt eines Ein- oder Mehrschneckenextruders, andererseits durch die Rotationsgeschwindigkeit eines rotierenden Schneidmessers eingestellt werden kann.

Wie oben erwähnt, bietet sich das erfindungsgemäße Streugranulat insbesondere als Einstreugranulat für Rasen- und Kunstrasenplätze an, wobei es allerdings auch überall dort eingesetzt werden kann, wo bislang die Gefahr bestand, dass der Umwelt exponierte Kunststoffgranulate in die Umgebung gelangen und dort insbesondere einen schädlichen Eintrag von sogenanntem Mikroplastik verursachen.

So besteht ein weiteres vorteilhaftes Einsatzgebiet des erfindungsgemäßen Streugranulates beispielsweise als Distanzmaterial für die Lagerung von Baumaterialien, insbesondere in Form von Bodenbelagsmaterialien, wie z.B. von Betonwaren, mineralischen Belägen, künstlichen Steinen, künstlichen Platten, keramischen Fliesen, Natursteinen, Natursteinplatten und dergleichen. In diesem Zusammenhang ist es bereits bekannt, Streugranulate aus synthetischen Kunststoffen bei der Lagerung von derartigen Baumaterialien zwischen den einzelnen, übereinander gestapelten Lagen als Distanzmaterial anzuordnen, um einerseits eine Luftzirkulation zwischen den einzelnen Lagen zu ermöglichen, so dass Feuchtigkeit aus den Zwischenräumen entweichen kann und ein Eindringen von Feuchtigkeit in die Stapel infolge geringerer Kapillarkräfte vermindert wird. Andererseits dienen solche Streugranulate als Distanzmaterialien dem Schutz vor einer mechanischen Beschädigung der Baumaterialien, wie insbesondere vor einem Verkratzen deren Sichtseiten.

Überdies ist eine Verwendung des erfindungsgemäßen Streugranulates als Winterdienst-Streumittel denkbar, indem es zur Erhöhung der Reibung auf Schnee und Eis auf öffentlichen Straßen oder Bürgersteigen ausgebracht werden kann.

Bei einem erfindungsgemäßen Rasen- oder Kunstrasenplatz, auf welchen das Streugranulat der oben beschriebenen Art als Einstreugranulat aufgebracht worden ist, kann die durchschnittliche Füllhöhe des Streugranulates vorzugsweise zwischen etwa 1,0 mm und etwa 2,5 mm, insbesondere zwischen etwa 1,3 mm und etwa 2,0 mm, betragen.

Gemäß einer Weiterbildung eines solchen erfindungsgemä-ßen Rasen- oder Kunstrasenplatzes kann ferner vorgesehen sein, dass er mit einer antimikrobiellen Ausrüstung versehen ist, um den biologischen Abbau des Streugranulates auf dem Rasen- und Kunstrasenplatz zu verzögern, so dass der biologische Abbau des Streugranulates vornehmlich dann stattfinden kann, wenn letzteres aus dem (Kunst)rasenplatz ausgetragen worden ist, wohingegen auf dem (Kunst)rasenplatz selbst die Eigenschaften des Streugranulates trotz umweltbedingter Einwirkungen über einen langen Zeitraum weitestgehend unverändert erhalten bleiben. Zu diesem Zweck kann der (Kunst)rasenplatz beispielsweise mit gesundheitlich unbedenklichen Antimikrobiotika und/oder Desinfektionsmitteln besprüht werden, oder es können insbesondere im Falle eines Kunstrasenplatzes antimikrobielle Ausrüstungen dessen Fasern und/oder dessen Elastikschicht vorgesehen sein, z.B. in Form von in deren Polymermatrix eingearbeiteten Silberionen oder dergleichen.

## Patentansprüche

1. Streugranulat, welches zur Verwendung als Einstreugranulat für Rasen- und Kunstrasenplätze geeignet ist, wobei das Streugranulat eine Polymermatrix mit einem Anteil zwischen 10 Mass.-% und 100 Mass.-% wenigstens eines biologisch abbaubaren Polymers und wenigstens einen in die Polymermatrix mit dem wenigstens einen biologisch abbaubaren Polymer eingebetteten Füllstoff aus der Gruppe der natürlichen Füllstoffe aufweist, **dadurch gekennzeichnet, dass** das Streugranulat wenigstens einen Füllstoff aus der Gruppe der zerkleinerten Fruchtkerne aufweist.

2. Streugranulat nach Anspruch 1, **dadurch gekennzeichnet, dass** der wenigstens eine Füllstoff aus der Gruppe der zerkleinerten Fruchtkerne eine gegenüber der Härte der Polymermatrix höhere Härte aufweist.

3. Streugranulat nach Anspruch 1 oder 2, **dadurch gekennzeichnet, dass** der wenigstens eine Füllstoff aus der Gruppe der zerkleinerten Fruchtkerne aus der Gruppe der Kerne von Olive, Kirsche, Aprikose, Mirabelle, Pflaume, Zwetschge, Pfirsich, Nektarine, Dattel, Mandel, Kaffeebeere, Mango, Apfel, Birne, Orange, Traube, Melone, Zitrone, Avocado und Papaya gewählt ist.

4. Streugranulat nach einem der Ansprüche 1 bis 3, **dadurch gekennzeichnet, dass** die Polymermatrix des Streugranulates einen Anteil des wenigstens einen biologisch abbaubaren Polymers von wenigstens 20 Mass.-%, insbesondere von wenigstens 30 Mass.-%, vorzugsweise von wenigstens 40 Mass.-%, aufweist.

5. Streugranulat nach einem der Ansprüche 1 bis 4, **dadurch gekennzeichnet, dass** wenigstens ein biologisch abbaubares Polymer der Polymermatrix des Streugranulates aus der Gruppe der biobasierten Polymere gewählt ist.

6. Streugranulat nach einem der Ansprüche 1 bis 5, **dadurch gekennzeichnet, dass** die Polymermatrix des Streugranulates
- eine Wasserlöslichkeit von höchstens 0,5 g/l, insbesondere von höchstens 0,1 g/l; und/oder
- einen Elastizitätsmodul von 0,1 GPa bis 8 GPa, insbesondere von 0,2 GPa bis 5 GPa; und/oder
- einen Schmelzpunkt von wenigstens 70°C, insbesondere von wenigstens 80°C, vorzugsweise von wenigstens 90°C,
aufweist.

7. Streugranulat nach einem der Ansprüche 1 bis 6, **dadurch gekennzeichnet, dass** wenigstens ein biologisch abbaubares Polymer der Polymermatrix des Streugranulates aus der Gruppe der thermoplastischen Polymere gewählt ist, insbesondere aus der Gruppe
- der Polyhydroxyalkanoate, insbesondere Polyhydroxybutyrat (PHB), Poly-4-hydroxybutyrat (P4HB), Polyhydroxyvalerat (PHV), Polyhydroxyessigsäure, Poly(3-hydroxybutyrat-co-4-hydroxybutyrat), Poly(3-hydroxy-butyrat-co-4-hydroxybutyrat), Poly(3-hydroxybutyrat-co-4-hydroxybutyrat), Polyhydroxyhexanoat (PHH) und/oder Polyhydroxyoctanoat (PHO);
- Polylactid (PLA);
- Stärke und/oder deren Derivate;
- Polybutylenadipat-terephthalat (PBAT), Polybutylensuccinat (PBS) und/oder Polybutylensuccinat-adipat (PBSA);
- Polysaccharide und/oder deren Derivate;
- Lignin und/oder dessen Derivate;
- Polycaprolactone (PCL);
- Proteine und/oder deren Derivate
einschließlich deren Blends.

8. Streugranulat nach einem der Ansprüche 1 bis 7, **dadurch gekennzeichnet, dass** wenigstens ein biologisch abbaubares Polymer der Polymermatrix des Streugranulates aus der Gruppe der elastomeren Polymere gewählt ist, insbesondere aus der Gruppe Naturkautschuk.

9. Streugranulat nach einem der Ansprüche 1 bis 8, **dadurch gekennzeichnet, dass** der wenigstens eine Füllstoff aus der Gruppe der zerkleinerten Fruchtkerne
- in einem Anteil von wenigstens 10 Mass.-%, insbesondere von wenigstens 20 Mass.-%, vorzugsweise von wenigstens 30 Mass.-%, jeweils bezogen auf die Gesamtmasse des Streugranulates, vorliegt; und/oder
- eine Partikelgröße von wenigstens 0,01 mm, insbesondere von wenigstens 0,1 mm, vorzugsweise von wenigstens 0,3 mm, aufweist; und/oder
- eine Partikelgröße von höchstens 1,5 mm, insbesondere von höchstens 1 mm, vorzugsweise von höchstens 0,8 mm, aufweist.

10. Streugranulat nach einem der Ansprüche 1 bis 9, **dadurch gekennzeichnet, dass** es wenigstens einen weiteren in die Polymermatrix mit dem wenigstens einen biologisch abbaubaren Polymer eingebetteten Füllstoff aus der Gruppe der natürlichen Füllstoffe aufweist, insbesondere in Form von Cellulose, Holz, Lignin, Schilf, Miscanthus, Hanf, Seegras, Fruchthülsen und -schalen und Blumenkernschalen.

11. Streugranulat nach einem der Ansprüche 1 bis 10, **dadurch gekennzeichnet, dass** es
- abgerundete, insbesondere im Wesentlichen sphärische, Granulatpartikel aufweist; und/oder
- eine Granulatpartikelgröße von wenigstens 1,0 mm, insbesondere von wenigstens 1,5 mm, vorzugsweise von wenigstens 2,0 mm; und/oder
- eine Granulatpartikelgröße von höchstens 5,0 mm, insbesondere von höchstens 4,5 mm, vorzugsweise von höchstens 4,0 mm, aufweist.

12. Verwendung eines Streugranulates nach einem der Ansprüche 1 bis 11
- als Einstreugranulat für Rasen- und Kunstrasenplätze,
- als Distanzmaterial für die Lagerung von Baumaterialien, insbesondere in Form von Bodenbelagsmaterialien, und/oder
- als Winterdienst-Streumittel.

13. Rasen- oder Kunstrasenplatz, auf welchen ein Einstreugranulat aufgebracht ist, **dadurch gekennzeichnet, dass** es sich bei dem Einstreugranulat um ein Streugranulat nach einem der Ansprüche 1 bis 11 handelt.

14. Rasen- oder Kunstrasenplatz nach Anspruch 13, **dadurch gekennzeichnet, dass** das Streugranulat mit einer durchschnittlichen Füllhöhe zwischen 1,0 mm und 2,5 mm, insbesondere zwischen 1,3 mm und 2,0 mm, aufgebracht ist.

15. Rasen- oder Kunstrasenplatz nach Ansprüche 13 oder 14, **dadurch gekennzeichnet, dass** er mit einer antimikrobiellen Ausrüstung versehen ist, um den biologischen Abbau des Streugranulates auf dem Rasen- und Kunstrasenplatz zu verzögern.

## Claims

1. Spreadable granulate being suitable for use as infill granulate for grass and artificial turf fields, the spreadable granulate comprising a polymer matrix with a percentage between 10% by mass and 100% by mass of at least one biodegradable polymer and at least one filler from the group of natural fillers being embedded in the polymer matrix with the at least one biodegradable polymer, **characterized in that** the granulate comprises at least one filler from the group of the comminuted fruit kernels.

2. Spreadable granulate according to claim 1, **characterized in that** the at least one filler from the group of comminuted fruit kernels has a higher hardness than a hardness of the polymer matrix.

3. Spreadable granulate according to claim 1 or 2, **characterized in that** the at least one filler from the group of comminuted fruit kernels is selected from the group of kernels from olives, cherries, apricots, mirabelle plums, plums, damsons, peaches, nectarines, dates, almonds, coffee berries, mangoes, apples, pears, oranges, grapes, melons, lemons, avocados, and/or papayas.

4. Spreadable granulate according to any one of claims 1 to 3, **characterized in that** the polymer matrix of the spreadable granulate has a percentage of the at least one biodegradable polymer of at least 20% by mass, in particular of at least 30% by mass, preferably of at least 40% by mass.

5. Spreadable granulate according to any one of claims 1 to 5, **characterized in that** at least one biodegradable polymer of the polymer matrix of the spreadable granulate is selected from the group of biobased polymers.

6. Spreadable granulate according to any one of claims 1 to 5, **characterized in that** the polymer matrix of the spreadable granulate comprises:
- a water solubility of at most 0.5 g/L, in particular of at most 0.1 g/L; and/or
- a modulus of elasticity from 0.1 GPa to 8 GPa, in particular from 0.2 GPa to 5 GPa; and/or
- a melting point of at least 70°C, in particular of at least 80°C, preferably of at least 90°C.

7. Spreadable granulate according to any one of claims 1 to 6, **characterized in that** at least one biodegradable polymer of the polymer matrix of the spreadable granulate is selected from the group of the thermoplastic polymers, in particular from the group of
- polyhydroxyalkanoates, in particular polyhydroxybutyrate (PHB), poly-4-hydroxybutyrate (P4HB), polyhydroxyvalerate (PHV), polyhydroxyacetic acid, poly(3-hydroxybutyrate-co-4-hydroxybutyrate), poly(3-hydroxybutyrate-co-4-hydroxybutyrate), poly(3-hydroxybutyrate-co-4-hydroxybutyrate), polyhydroxyhexanoate (PHH), and/or polyhydroxyoctanoate (PHO);
- polylactide (PLA);
- starch and/or its derivatives;
- polybutylene adipate terephthalate (PBAT), polybutylene succinate (PBS), and/or polybutylene succinate adipate (PBSA);
- polysaccharides and/or their derivatives;
- lignin and/or its derivatives;
polycaprolactones (PCL); and/or
proteins and/or their derivatives
including the blends thereof.

8. Spreadable granulate according to any one of claims 1 to 7, **characterized in that** at least one biodegradable polymer of the polymer matrix of the spreadable granulate is selected from the group of the elastomeric polymers, in particular from the group of natural rubber.

9. Spreadable granulate according to any one of claims 1 to 8, **characterized in that** the at least one filler from the group of comminuted fruit kernels
- is present in a percentage of at least 10% by mass, in particular of at least 20% by mass, preferably of at least 30% by mass, relative to the total mass of the spreadable granulate, respectively; and/or
- has a particle size of at least 0.01 mm, in particular of at least 0.1 mm, preferably of of at least 0.3 mm; and/or
- has a particle size of at most 1.5 mm, in particular of at most 1 mm, preferably of at most 0.8 mm.

10. Spreadable granulate according to any one of claims 1 to 9, **characterized in that** it comprises at least one further filler from the group of natural fillers being embedded in the polymer matrix with the at least one biodegradable polymer, in particular in the form of cellulose, wood, lignin, reeds, miscanthus, hemp, seaweed, fruit husks and shells, and/or flower seed shells.

11. Spreadable granulate according to any one of claims 1 to 10, **characterized in that** it
- comprises rounded, in particular substantially spherical, granule particles; and/or
- has a granule particle size of at least 1.0 mm, in particular of at least 1.5 mm, preferably of at least 2.0 mm; and/or
- has a granule particle size of at most 5.0 mm, in particular of at most 4.5 mm, preferably of at most 4.0 mm.

12. Use of a spreadable granulate according to any one of claims 1 to 11
- as spreadable infill granulate for grass and artificial turf fields,
- as spacer material for the storage of construction materials, in particular of floor covering materials, and/or
- as grit for winter service.

13. Grass or artificial turf field onto which an infill granulate is applied, **characterized in that** the infill granulate is a spreadable granulate according to any one of claims 1 to 11.

14. Grass or artificial turf field according to claim 13, **characterized in that** the spreadable granulate is applied with an average filling height between 1.0 mm and 2.5 mm, in particular between 1.3 mm and 2.0 mm.

15. Grass or artificial turf field according to claim 13 or 14, **characterized in that** it is provided with an antimicrobial finish in order to delay the biodegradation of the spreadable granulate on the grass and artificial turf field.

## Revendications

1. Granulé d'épandage, adapté à l'utilisation en granulé de remplissage pour des terrains en gazon et gazon synthétique, dans lequel le granulé d'épandage est une matrice polymère avec une teneur comprise entre 10 % en masse et 100 % en masse d'au moins un polymère biodégradable et comportant au moins une matière de remplissage logée dans la matrice polymère avec l'au moins un polymère biodégradable et appartenant au groupe des matières de remplissage naturelles, **caractérisé en ce que** le granulé d'épandage comporte au moins une matière de remplissage appartenant au groupe composé des noyaux à fruits concassés.

2. Granulé d'épandage selon la revendication 1, **caractérisé en ce que** l'au moins une matière de remplissage appartenant au groupe composé des noyaux à fruits concassés comporte une dureté supérieure à la dureté de la matrice polymère.

3. Granulé d'épandage selon la revendication 1 ou 2, **caractérisé en ce que** l'au moins une matière de remplissage est sélectionnée dans le groupe composé des noyaux à fruits concassés appartenant au groupe des noyaux d'olive, cerise, abricot, mirabelle, prune, quetsche, cerise, nectarine, datte, amande, grain de café, mangue, pomme, poire, orange, raison, melon, citron, avocat et papaye.

4. Granulé d'épandage selon l'une quelconque des revendications 1 à 3, **caractérisé en ce que** la matrice polymère des granulés d'épandage présente une teneur en au moins un polymère biodégradable d'au moins 20 % en masse, notamment d'au moins 30 % en masse, de préférence d'au moins 40 % en masse.

5. Granulé d'épandage selon l'une quelconque des revendications 1 à 4, **caractérisé en ce qu'**au moins un polymère biodégradable de la matrice polymère des granulés d'épandage est sélectionné dans le groupe composé des polymères biosourcés.

6. Granulé d'épandage selon l'une quelconque des revendications 1 à 5, **caractérisé en ce que** la matrice polymère des granulés d'épandage comporte :
- une solubilité de tout au plus 0,5 g/l, notamment de tout au plus 0,1 g/l ; et/ou
- un module d'élasticité allant de 0,1 GPa à 8 GPa, notamment de 0,2 GPa à 5 GPa ; et/ou
- un point de fusion d'au moins 70 °C, notamment d'au moins 80 °C, de préférence d'au moins 90 °C.

7. Granulé d'épandage selon l'une quelconque des revendications 1 à 6, **caractérisé en ce qu'**au moins un polymère biodégradable de la matrice polymère des granulés d'épandage est sélectionné dans le groupe des polymères thermoplastiques, dans le groupe :
- des polyhydroxyalkanoates, notamment du polyhydroxybutyrate (PHB), du poly-4-hydroxybutyrate (P4HB), du polyhydroxyvalérate (PHV), de l'acide acétique polyhy-droxylé, du poly(3-hydroxybutyrate-co-4-hydroxybutyrate), du poly(3-hydroxy-butyrate-co-4-hydroxybutyrate), du poly(3-hydroxybutyrate- co-4-hydroxybutyrate), du polyhydroxyhéxanoate (PHH) et/ou du polyhydroxyoctanoate (PHO) ;
- du polylactide (PLA) ;
- de l'amidon et/ou de ses dérivés ;
- du polybutylène-adipate-téréphthalate (PBAT), du polybutylène-succinate (PBS) et/ou du polybutylène-succinate-adipate (PBSA) ;
- des polysaccharides et/ou de leurs dérivés ;
- de la lignine et/ou de ses dérivés ;
- des polycaprolactones (PCL) ;
- des protéines et/ou de leurs dérivés, y compris leurs mélanges.

8. Granulé d'épandage selon l'une quelconque des revendications 1 à 7, **caractérisé en ce qu'**au moins un polymère biodégradable de la matrice polymère des granulés d'épandage est sélectionné dans le groupe composé des polymères élastomères, notamment dans le groupe du caoutchouc naturel.

9. Granulé d'épandage selon l'une quelconque des revendications 1 à 8, **caractérisé en ce que** l'au moins une matière de remplissage provient du groupe des noyaux à fruits concassés :
- selon une teneur d'au moins 10 % en masse, notamment d'au moins 20 % en masse, de préférence d' au moins 30 % en masse, respectivement par rapport à la masse totale des granulés d'épandage ; et/ou
- une taille de particule d'au moins 0,01 mm, notamment d'au moins 0,1 mm, de préférence d'au moins 0,3 mm ; et/ou
- une taille de particule de tout au plus 1,5 mm, notamment de tout au plus 1 mm, de préférence de tout au plus 0,8 mm.

10. Granulé d'épandage selon l'une quelconque des revendications 1 à 9, **caractérisé en ce qu'**il présente au moins une matière de remplissage supplémentaire logée dans la matrice polymère avec au moins un polymère biodégradable et appartenant au groupe des matières de remplissage naturelles, notamment sous la forme de cellulose, de bois, de lignine, de fibres, de miscanthus, de chanvre, de varech, d'enveloppes et de coques de fruit et d'enveloppes de graines florales.

11. Granulé d'épandage selon l'une quelconque des revendications 1 à 10, **caractérisé en ce qu'**il présente :
- des particules de granulé arrondies, notamment pour l'essentiel sphériques ; et/ou
- une taille de particule de granulé d'au moins 1,0 mm, notamment d'au moins 1,5 mm, de préférence d'au moins 2,0 mm ; et/ou
- une taille de particule de granulé de tout au plus 5,0 mm, notamment de tout au plus 4,5 mm, de préférence de tout au plus 4,0 mm.

12. Utilisation de granulés d'épandage selon l'une quelconque des revendications 1 à 11 :
- sous la forme de granulés de remplissage pour terrains en gazon et gazon synthétique ;
- sous la forme d'un matériau d'écartement pour le stockage de matériaux de construction, notamment sous forme de matériaux de garniture de sol ; et/ou
- de moyens d'épandage de service d'hiver.

13. Terrain en gazon ou en gazon synthétique sur lequel un granulé de remplissage est appliqué sur, **caractérisé en ce que** le granulé de remplissage est un granulé d'épandage selon l'une quelconque des revendications 1 à 11.

14. Terrain en gazon ou en gazon synthétique selon la revendication 13, **caractérisé en ce que** le granulé d'épandage est appliqué sur une hauteur de remplissage moyenne comprise entre 1,0 mm et 2,5 mm, notamment entre 1,3 mm et 2,0 mm.

15. Terrain en gazon ou en gazon synthétique selon les revendications 13 ou 14, **caractérisé en ce qu'**il est pourvu d'un traitement antimicrobien permettant de retarder la dégradation biologique des granulés d'épandage sur le terrain en gazon et gazon synthétique.
